# NEW EUROPEAN PATENT SPECIFICATION

(11) **EP 3 875 798 B2**
(45) Date of publication and mention of the opposition decision: **10.06.2026**
(45) Mention of the grant of the patent: 12.07.2023
(21) Application number: 19879787.0
(22) Date of filing: 27.09.2019
(51) Int. Cl.: F16D 65/095, F16D 65/092

(54) **SHIM, SHIM MOUNTING METHOD, AND PAD ASSEMBLY FOR DISC BRAKE**
UNTERLEGSCHEIBE, MONTAGEVERFAHREN FÜR UNTERLEGSCHEIBE UND SCHUHANORDNUNG FÜR SCHEIBENBREMSE
CALE, PROCÉDÉ DE MONTAGE DE CALE ET ENSEMBLE PLAQUETTE POUR FREIN À DISQUE

(30) Priority: 31.10.2018 JP 2018205828
(43) Date of publication of application: 08.09.2021
(73) Proprietor: Akebono Brake Industry Co., Ltd., Tokyo 103-8534 (JP)
(72) Inventor: SHINDO, Takayuki, Tokyo 103-8534 (JP); HARIGAI, Yoshikazu, Tokyo 103-8534 (JP); YAMAZAKI, Akihiko, Tokyo 103-8534 (JP); OKADA, Yuichi, Tokyo 103-8534 (JP)
(74) Representative: Grünecker Patent- und Rechtsanwälte PartG mbB
(86) International application number: PCT/JP2019/038422
(87) International publication number: WO 2020/090315

(56) References cited:
- EP-A1- 3 106 700
- WO-A1-2017/145088
- DE-A1- 102005 002 762
- DE-A1- 102018 001 999
- JP-A- 2016 098 912
- KR-A- 20120 104 740
- US-A- 472 242
- US-B2- 9 759 277

## Description

### TECHNICAL FIELD

The present invention relates to a shim mounting method and a pad assembly for a disc brake

### BACKGROUND ART

A friction pad used in a disc brake for a vehicle such as an automobile or a railway is configured by fixing a lining in sliding contact with a disc rotor and a metal back plate held by a caliper body or a caliper bracket. Further, a shim plate (a shim) for the purpose of preventing squeal during braking, uneven wear of the lining, or of heat insulation is attached to a back surface of the back plate (see Patent Literature 1).

As a shim plate attachment structure, there is a structure in which a rectangular engaging protrusion is provided at a center of a back surface of a back plate, as shown in Patent Literature 1. At a center of the shim plate, cuts are made in four corners of a rectangular opening, and an engaging hole is formed in which claw pieces at four peripheries of the opening portion are inclined to one side. Then, the engaging hole is press-fitted into the engaging protrusion, and the shim plate is attached to the back surface of the back plate. According to the shim plate attachment structure, no protruding piece for bending and engaging with an outer peripheral edge portion of the back plate from an outside is required at an outer peripheral edge portion of the shim plate. Accordingly, the shim plate may have a shape that matches a shape of the back surface of the back plate. As a result, the shim plate can be effectively made from a plate material without waste, and a yield can be improved.

EP 3 106 700 A1 discloses a brake pad with a preformed multi layer friction pad and shim, and a method of assembling a brake pad and a shim.

### CITATION LIST

### PATENT LITERATURE

[Patent Literature 1] Japanese Utility Model Publication No. H6-30541

### SUMMARY OF INVENTION

### TECHNICAL PROBLEM

However, in the above-described conventional shim plate, since a relative position between the back plate and the shim plate depends on a press-fitting portion due to plastic deformation, it is difficult to stably obtain high assembly accuracy. Further, in the conventional shim plate, since the engaging hole is press-fitted into the engaging protrusion of the back plate, work using a jig or a tool is required at the time of on-site emergency response, which is disadvantageous in shortening work time.

The present invention has been made in view of the above circumstances, and an object thereof is to provide a shim that can be assembled to a back plate with high accuracy without using a jig or a tool, a shim attachment method, and a disc brake pad assembly.

### ADVANTAGEOUS EFFECTS OF INVENTION

According to a first aspect, there is provided a pad assembly with the features of claim 1, and according to a second aspect, there is provided a shim mounting method with the features of claim 7.

According to a shim attachment method of the present invention, the shim can be assembled to back plates with high accuracy and with short-time work without using a jig or a tool.

According to a disc brake pad assembly of the present invention, since the shim is assembled so as to surround fixing portions of back plates, falling of the shim does not occur unless the shim is broken in a caliper holder mounting state.

The present invention has been briefly described above. Further, details of the present invention are further clarified by reading a mode for carrying out the invention (hereinafter, referred to as "embodiment") described below with reference to attached drawings.

### BRIEF DESCRIPTION OF DRAWINGS

[Fig. 1] Fig. 1(a) is a perspective view of a disc brake pad assembly in which a shim according to an embodiment of the present invention is attached to friction pads. Fig. 1(b) is an exploded perspective view of Fig. 1(a).
[Fig. 2] Fig. 2(a) is a plan view of the shim shown in Fig. 1. Fig. 2(b) is a plan view of the friction pads shown in Fig. 1. Fig. 2(c) is a plan view of the disc brake pad assembly shown in Fig. 1.
[Fig. 3] Fig. 3(a) is a cross-sectional view taken along a line A-A in Fig. 2(c). Fig. 3(b) is a cross-sectional view taken along a line B-B in Fig. 2(c).
[Fig. 4] Fig. 4(a) is a perspective view of the back plate. Fig. 4(b) is a perspective view of the friction pad in which a lining is fixed to the back plate.
[Fig. 5] Fig. 5(a) is a perspective view of the shim in which one friction pad is being attached. Fig. 5(b) is a perspective view in which the other friction pad is being attached.
[Fig. 6] Fig. 6(a) is a perspective view of the disc brake pad assembly being attached to the caliper holder. Fig. 6(b) is a perspective view of the disc brake pad assembly shown in Fig. 6(a) when viewed from a lining side.
[Fig. 7] Fig. 7(a) is a plan view of a shim according to a modified example in which grease holding holes are bored. Fig. 7(b) is a plan view of the friction pads.
Fig. 7(c) is a plan view of a disc brake pad assembly in which the shim according to the modified example is attached to the friction pads.

### DESCRIPTION OF EMBODIMENTS

Hereinafter, an embodiment according to the present invention will be described with reference to the drawings.

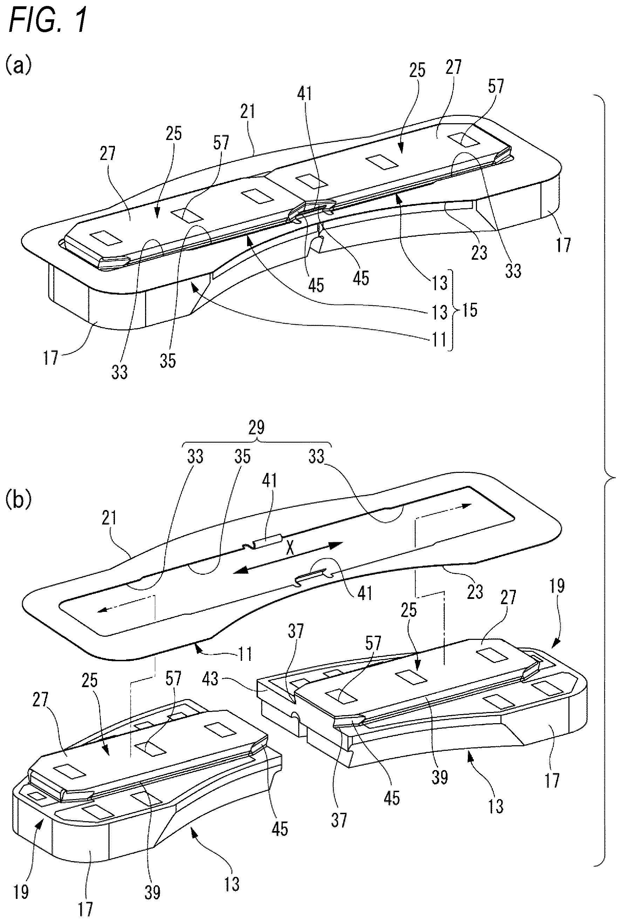

Fig. 1(a) is a perspective view of a disc brake pad assembly 15 in which a shim 11 according to an embodiment of the present invention is attached to friction pads 13. Fig. 1(b) is an exploded perspective view of Fig. 1(a).

The shim 11 according to the present embodiment is suitably used for, for example, a disc brake pad assembly of a railway vehicle brake apparatus. The shim 11 is attached to back surfaces of back plates 19 having linings 17 molded on surfaces thereof. As a material of the shim 11, for example, a general thin-plate stainless steel material is used.

An outer shape of the shim 11 is formed in a substantially rectangular shape. More precisely, one of a pair of parallel long side portions is formed as a convex arc 21 that protrudes outward, and the other is formed as a concave arc 23 recessed inward. Centers of the convex arc 21 and the concave arc 23 coincide with a center of a disk rotor (not shown) used in the railway vehicle brake apparatus. The outer shape of the shim 11 is not limited thereto. The shim 11 can have any processing shape other than a shim engaging hole described later.

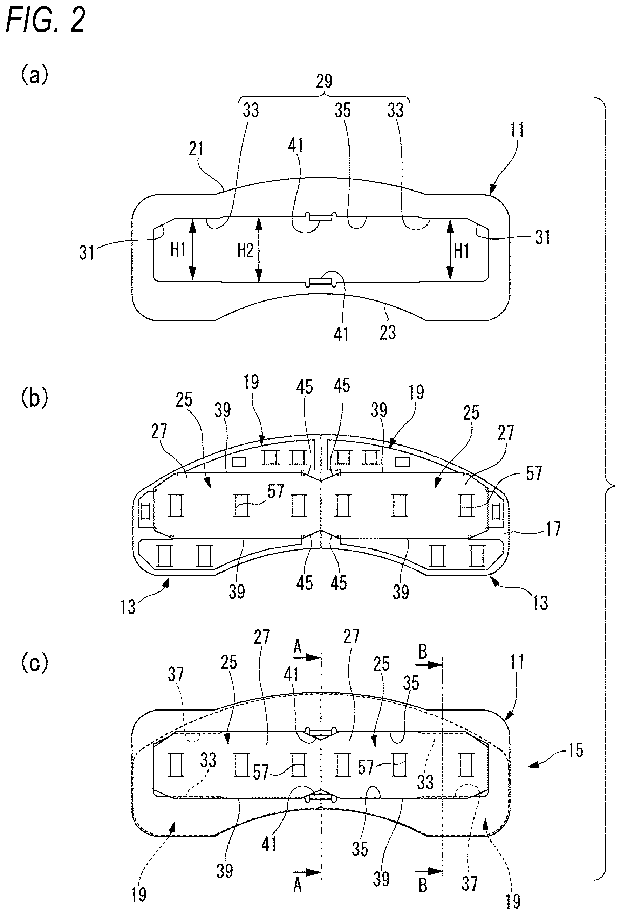

The shim 11 has a shim engaging hole 29 into which dovetail-shaped fixing portions 27 of anchor plates 25 provided on the back plates 19 are fitted. The shim engaging hole 29 is formed as a substantially rectangular hole long in a longitudinal direction of the shim 11. The shim engaging hole 29 may be formed such that arbitrary portions of four corners are chamfered portions 31 (see Fig. 2(a)) that follow outer shapes of the fixing portions 27.

The shim engaging hole 29 of the shim 11 includes engaging portions 33 and an insertion portion 35.

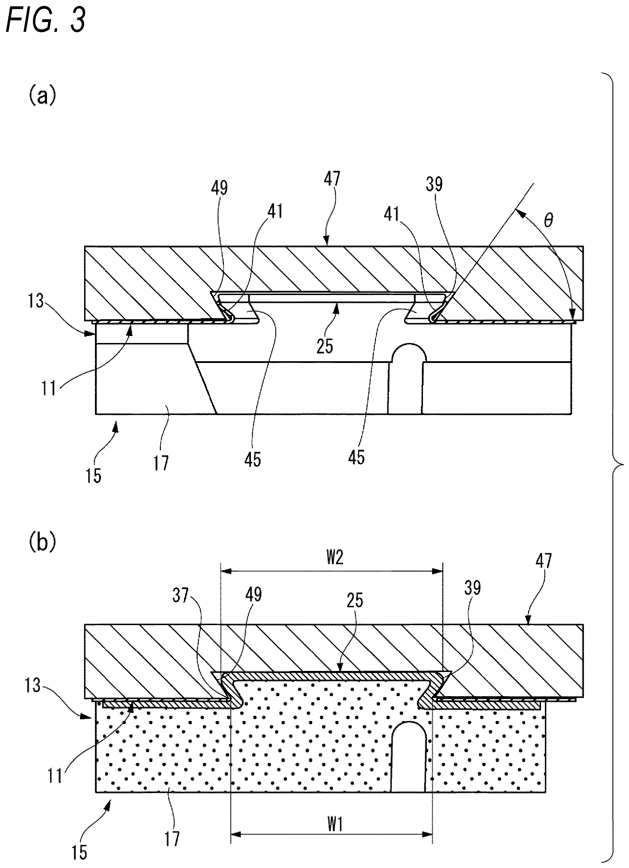

The engaging portion 33 has an opening width H1 (see Fig. 2(a)) that is larger than a width W1 (see Fig. 3(b)) of a dovetail root portion 37 of the fixing portion 27 and smaller than a width W2 (see Fig. 3(b)) of a wide portion 39 of the fixing portion 27. The engaging portion 33 is formed as a part of the shim engaging hole 29 along a dovetail insertion direction (an arrow X direction in Fig. 1) of the fixing portion 27. In the present embodiment, as will be described later, the engaging portions 33 are formed on both end sides along the dovetail insertion direction X.

The insertion portion 35 has an opening width H2 (see Fig. 2(a)) larger than the width W2 of the wide portion 39 of the fixing portion 27, and is formed as another portion of the shim engaging hole 29 along the dovetail insertion direction X. In the present embodiment, as will be described later, the insertion portion 35 is formed on a center side along the dovetail insertion direction X.

Fig. 2(a) is a plan view of the shim 11 shown in Fig. 1. Fig. 2(b) is a plan view of the friction pads 13 shown in Fig. 1. Fig. 2(c) is a plan view of the disc brake pad assembly 15 shown in Fig. 1.

In the present embodiment, the engaging portions 33 of the shim 11 are formed on both end sides of the shim engaging hole 29 along the dovetail insertion direction X. Further, the insertion portion 35 of the shim 11 is formed on the center side of the shim engaging hole 29 along the dovetail insertion direction X. That is, in the shim engaging hole 29, the engaging portions 33 are formed on both sides of the insertion portion 35.

A pair of fixing claw portions 41 are provided at a central portion of the shim engaging hole 29 along the dovetail insertion direction X. The pair of fixing claw portions 41 are respectively engaged with chamfered portions 45 formed at both end portions of the fixing portions 27 in a width direction on abutment surfaces 43 (see Fig. 1(b)) of the two-divided back plates 19. As shown in Fig. 2(c), the pair of fixing claw portions 41 are engaged with the chamfered portions 45 to restrict movement of both of the two-divided back plates 19 and position the two-divided back plates 19 in the dovetail insertion direction X.

Fig. 3(a) is a cross-sectional view taken along a line A-A in Fig. 2(c). Fig. 3(b) is a cross-sectional view taken along a line B-B in Fig. 2(c).

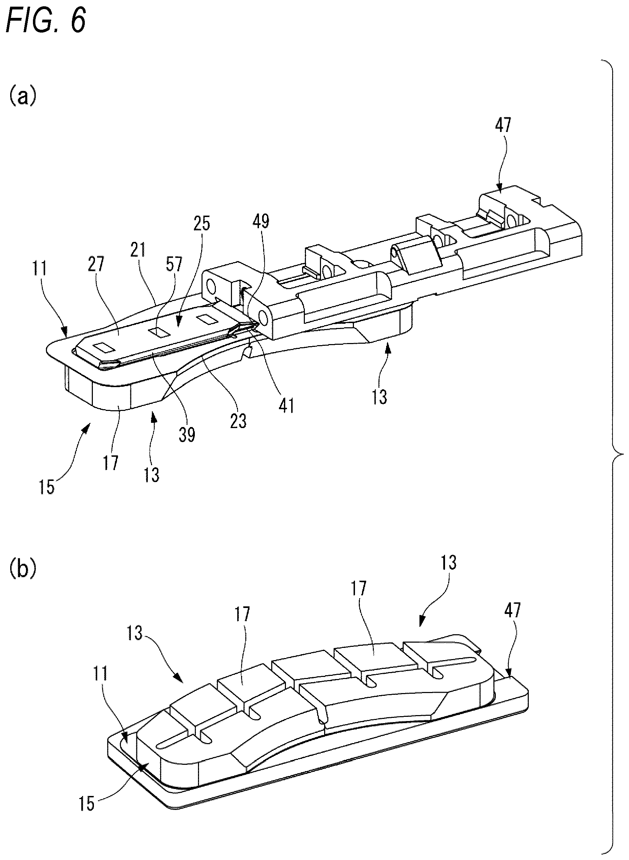

In the shim 11, the pair of fixing claw portions 41 are engaged to a dovetail-groove-shaped holding portion 49 of a caliper holder 47 (see Fig. 6(a)) that holds the fixing portion 27 from inside toward outside. Accordingly, the shim 11 is prevented from being deformed in a direction in which a center of the shim engaging hole 29 is widened.

In the present embodiment, one shim 11 is assembled to the two back plates 19. Here, the two back plates 19 and the linings 17 constitute a set of friction pads 13 and 13. That is, the shim 11 is assembled so as to surround the two fixing portions 27 of the set of friction pads 13 and 13. In the two friction pads 13, the back plate 19, the anchor plate 25, the fixing portion 27, and the lining 17 are formed in a symmetrical shape with the abutment surfaces 43 as a boundary. Since the two friction pads 13 have the same configuration except for having the symmetrical shape, the two friction pads 13 will be described with the same reference numerals in the present description.

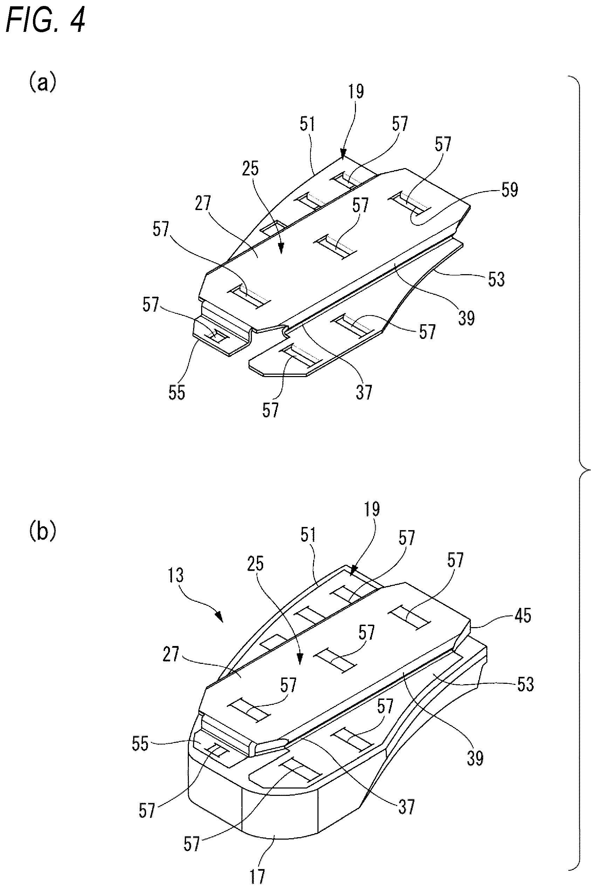

Fig. 4(a) is a perspective view of the back plate 19. Fig. 4(b) is a perspective view of the friction pad 13 in which the lining 17 is fixed to the back plate 19.

The back plate 19 is integrally formed by a pressing process. As shown in Fig. 4(a), the back plate 19 is formed such that a convex arc piece portion 51 protrudes from one of a pair of parallel long side portions of the anchor plate 25 via the dovetail root portion 37. The back plate 19 is formed such that a concave arc piece portion 53 protrudes from the other of the pair of parallel long side portions of the anchor plate 25 via the dovetail root portion 37. Further, a small piece portion 55 is formed in a protruding manner on one short side portion of the anchor plate 25 on a side opposite to an abutment side. As shown in Fig. 4(b), the convex arc piece portion 51, the concave arc piece portion 53, and the small piece portion 55 are embedded in the lining 17 to be fixed so that only a surface on an anchor plate side is exposed. Accordingly, the friction pad 13 in which the lining 17 is fixed to the back plate 19 is formed.

The lining 17 can be polymerized by mixing a friction material with, for example, a resin. In addition, in the lining 17, a friction material such as metal powder may be sintered on a surface of the back plate 19. In the back plate 19, a plurality of fixing holes 57 are bored in the anchor plate 25, the convex arc piece portion 51, the concave arc piece portion 53, and the small piece portion 55. The fixing hole 57 is formed in a quadrangular shape, and a folded piece 59 (see Fig. 4(a)) embedded in the lining 17 is formed on each side. In the back plate 19, the lining 17 enters and is solidified in the fixing holes 57, so that the folded pieces 59 are embedded and a fixing strength is increased.

Next, a shim attachment method according to the present embodiment will be described.

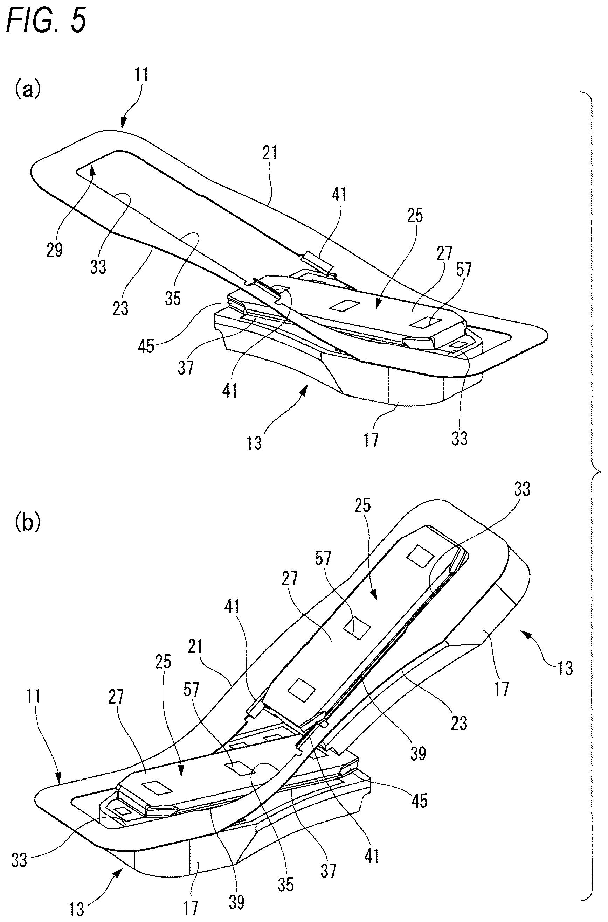

Fig. 5(a) is a perspective view of the shim 11 in which one friction pad 13 is being attached. Fig. 5(b) is a perspective view in which the other friction pad 13 is being attached.

In the shim attachment method according to the present embodiment, in a state where the shim 11 is bent along the dovetail insertion direction X, the fixing portions 27 of the two-divided back plates 19 are respectively inserted into the engaging portions 33 from the insertion portion 35, so that a set of (two) friction pads 13 and 13 are fitted into the shim engaging hole 29.

As a procedure of the shim attachment method, first, as shown in Fig. 5(a), the shim 11 is bent at the wide portion 39 along the dovetail insertion direction X, and one friction pad 13 is inserted into the engaging portion 33 on one side from the wide portion 39. One inserted friction pad 13 is mounted on one side of the shim engaging hole 29 in the dovetail insertion direction X by engaging the dovetail root portion 37 of the fixing portion 27 with the engaging portion 33.

Next, as shown in Fig. 5(b), the shim 11 on a side on which the friction pad 13 is not mounted is pressed against the other friction pad 13, and the other friction pad 13 is inserted into the other engaging portion 33 from the wide portion 39 in the same manner as described above while bending the shim 11 along the dovetail insertion direction X. The other inserted friction pad 13 is mounted on the other side of the shim engaging hole 29 in the dovetail insertion direction X by engaging the dovetail root portion 37 of the fixing portion 27 with the engaging portion 33. Accordingly, the attachment of the set of friction pads 13 and 13 to the shim 11 is completed.

Fig. 6(a) is a perspective view of the disc brake pad assembly 15 being attached to the caliper holder 47. Fig. 6(b) is a perspective view of the disc brake pad assembly 15 shown in Fig. 6(a) when viewed from a lining side.

The disc brake pad assembly 15 is configured by attaching the shim 11 to the back surfaces of two back plates 19. That is, the disc brake pad assembly 15 is configured by attaching one shim 11 to a set of two-divided type friction pads.

The disc brake pad assembly 15 may be configured by attaching one shim 11 to a single friction pad.

Next, a modified example of the above-described embodiment will be described.

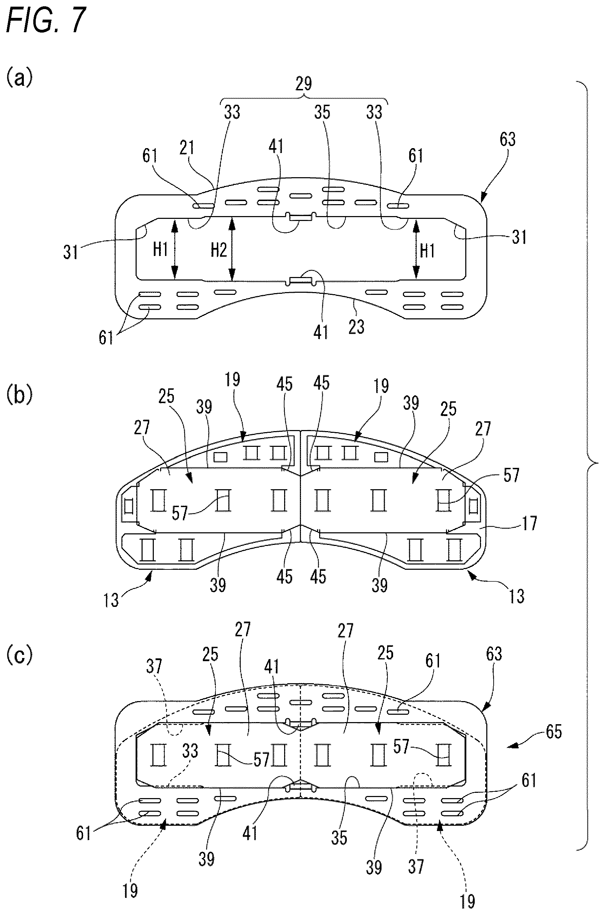

Fig. 7(a) is a plan view of a shim 63 according to the modified example in which grease holding holes 61 are bored. Fig. 7(b) is a plan view of the friction pads 13. Fig. 7(c) is a plan view of a disc brake pad assembly 65 in which the shim 63 according to the modified example is attached to the friction pads 13.

The shim 63 is provided with a plurality of grease holding holes 61 for storing grease at a portion facing back surfaces of the back plates 19.

The grease holding hole 61 can be formed as a hole (a rectangular hole) that extends along the dovetail insertion direction X of the shim engaging hole 29.

Next, functions of the configuration according to the above-described embodiment will be described.

In the shim 11 according to the present embodiment, the shim engaging hole 29 includes the engaging portions 33 and the insertion portion 35. The shim 11 is fixed to the back plates 19 by fitting the dovetail-shaped fixing portions 27 of the anchor plates 25 provided on the back plates 19 into the shim engaging hole 29. At this time, the fixing portions 27 can be inserted into the insertion portion 35 of the shim engaging hole 29 from a plate thickness direction of the shim 11. That is, the insertion portion 35 has the opening width H2 larger than the width W2 of the wide portion 39 of the fixing portion 27.

When the fixing portion 27 inserted into the insertion portion 35 of the shim engaging hole 29 from the plate thickness direction of the shim 11 is moved in a direction parallel to a plate surface of the shim 11 and reaches the engaging portion 33 of the shim engaging hole 29, the dovetail root portion 37 is engaged to the engaging portion 33. In the dovetail-shaped fixing portions 27 that penetrate the shim engaging hole 29, the engaging portions 33 formed by a pair of parallel protruding edge portions of the shim engaging hole 29 enter a pair of dovetail root portions 37 of the fixing portions 27. Accordingly, the fixing portion 27 is prevented from coming off in a direction perpendicular to the plate surface of the shim 11 by being restricted by the engaging portion 33. The shim 11 mounted on the back plates 19 in this manner contributes to preventing squeal during braking, uneven wear of the lining 17, or to heat insulation.

The shim 11 is formed of, for example, a general thin-plate stainless steel material. Therefore, the shim 11 can be bent in a front-back direction of the plate surface within an elastic limit range without using a tool or the like. Therefore, the dovetail-shaped fixing portion 27 of the anchor plate 25 can insert a dovetail into the engaging portion 33 by bending the shim 11 even in the shim engaging hole 29 in which the insertion portion 35 shorter than a dimension in the dovetail insertion direction (a mounting direction) is formed. When the shim 11 elastically returns to a flat plate shape after the fixing portion 27 is engaged to the engaging portion 33, since the insertion portion 35 is shorter than the dimension of the fixing portion 27 in the mounting direction, the fixing portion 27 cannot be detached from the insertion portion 35. When the shim 11 is sandwiched and assembled between the back plates 19 and the caliper holder 47, since the shim 11 is held in a flat plate shape, the fixing portions 27 are not detached due to the bending again.

Accordingly, the shim 11 can be assembled with high accuracy by engaging the engaging portions 33 of the shim engaging hole 29 to the dovetail root portions 37 without requiring plastic deformation.

In the shim 11 of the present embodiment, the engaging portions 33 are formed on both end sides of the shim engaging hole 29 along the dovetail insertion direction X. The insertion portion 35 is formed on the center side of the shim engaging hole 29 sandwiched between the engaging portions 33 on both end sides. That is, in the shim engaging hole 29, both end sides along the dovetail insertion direction X have the opening width H1 narrower than the wide portion 39 of the fixing portion 27, and the center side has the opening width H2 wider than the wide portion 39 of the fixing portion 27. Accordingly, the fixing portion 27 of the anchor plate 25 provided on the back plate 19 divided into two is inserted into the insertion portion 35 of the shim engaging hole 29 on the center side, and then moved (slid in parallel to the plate surface) to either one of both end sides. Therefore, the dovetail root portions 37 of the fixing portions 27 are respectively engaged to the engaging portions 33, and coming off from the shim engaging hole 29 is restricted.

In the shim 11 of the present embodiment, one shim 11 is assembled to the two back plates 19. Here, the two back plates 19 and the linings 17 constitute a set of friction pads 13 and 13. That is, the shim 11 is assembled so as to surround the two fixing portions 27 of the set of friction pads 13 and 13. The shim 11 is fixed by being sandwiched between the set of friction pads 13 and 13 and the caliper holder 47 by a holder mounting portion (that is, the two fixing portions 27) of the set of friction pads 13 being mounted on the caliper holder 47 as it is.

In the set of two-divided friction pads 13 and 13, the chamfered portions 45 are formed at both end portions of the fixing portion 27 in a width direction on the abutment surface 43 of each back plate 19. In the set of (two) friction pads 13 and 13, the abutment surfaces 43 of the pair of back plates 19 are abutted against each other at the central portion of the shim engaging hole 29. Therefore, small spaces of isosceles triangles to which the pair of chamfered portions 45 are connected are formed at both end portions of the fixing portion 27 in the width direction. The pair of fixing claw portions 41 formed at the central portion of the shim engaging hole 29 are engaged with the small spaces, respectively. Accordingly, the chamfered portions 45 of the set of (two) friction pads 13 and 13 are brought into contact with the fixing claw portions 41, so that movement of the friction pads 13 and 13 in the dovetail insertion direction X with respect to the shim 11 is restricted and the friction pads 13 and 13 are positioned in the same direction.

In the shim 11 of the present embodiment, the pair of fixing claw portions 41 are formed to be bent to an outside of the shim engaging hole 29 from a pair of hole edge portions facing each other at the central portion of the shim engaging hole 29. The fixing claw portion 41 bent to the outside of the shim engaging hole 29 intersects with the hole edge portion at a recessed corner of an angle θ (see Fig. 3(a)) smaller than 90 degrees. The recessed corner is a dovetail engaging surface to which the holding portion 49 of the caliper holder 47 is engaged, and substantially along the dovetail root portion 37 of the fixing portion 27. Therefore, when the dovetail-shaped fixing portion 27 is inserted into and engaged to the dovetail-groove-shaped holding portion 49 of the caliper holder 47, the pair of fixing claw portions 41 are also engaged to the holding portion 49. In the shim 11, the pair of fixing claw portions 41 are engaged to the holding portion 49, so that deformation of the shim engaging hole 29 that tends to widen in the width direction of the fixing portion 27 is restricted. Accordingly, the shim 11 is prevented from widening and deforming even when an unexpected load is applied during braking.

In the shim 63 according to the modified example of the present embodiment, the plurality of grease holding holes 61 are provided in the portion facing the back surfaces of the back plates 19. The grease holding hole 61 is filled with grease, so that the held grease is supplied in small amounts between the caliper holder 47 and the back plates 19. The supplied grease can contribute to preventing squeal during braking, uneven wear of the lining 17, or to heat insulation.

Further, in the shim 63, the grease holding hole 61 is formed as a hole (a rectangular hole) that extends along the dovetail insertion direction X. Accordingly, the shim 63 can improve a grease holding property at the time of assembling the caliper holder in the dovetail insertion direction X as compared with a case where the grease holding hole 61 is long in a direction orthogonal to the dovetail insertion direction X.

According to the shim attachment method of the present embodiment, in the two-divided type friction pads, one shim 11 (63) is attached to the set of friction pads. The set of two-divided type friction pads 13 and 13 to which one shim 11 (63) is attached constitute the disc brake pad assembly 15 (65). The disc brake pad assembly 15 (65) is assembled by being inserted into the holding portion 49 of the caliper holder 47 formed in a dovetail groove shape from one of the two continuous fixing portions 27. The shim 11 (63) is attached by being sandwiched between the two friction pads 13 and the caliper holder 47 by engaging the fixing portions 27 of the two friction pads 13 with the holding portion 49.

In the disc brake pad assembly 15 (65) according to the present embodiment, the shim 11 (63) is assembled so as to surround the fixing portions 27 of the pair of back plates 19. In the two-divided type friction pads 13 and 13, one shim 11 is attached to the set of friction pads. That is, the set of two-divided type friction pads become the disc brake pad assembly 15 (65) sub-assembled by the shim 11 (63).

The disc brake pad assembly 15 (65) can be removed from the caliper holder 47 even when an interval between a lower end of the caliper holder 47 and a ground is smaller than a length of the set of friction pads. Reasons are as follows. In the disc brake pad assembly 15 (65), the friction pad 13 on a lower side can be detached from the shim 11 (63) by bending the shim 11 (63) along the dovetail insertion direction X after the friction pad 13 on the lower side is pulled out directly downward from the lower end of the caliper holder 47. The friction pad 13 on an upper side can be removed from the caliper holder 47 in the same manner as the friction pad 13 on the lower side by being moved to the shim engaging hole 29 after the friction pad 13 on the lower side is removed.

Attachment work of the disc brake pad assembly 15 (65) can be easily performed in the same manner in a procedure reverse to the above-described removal work.

Therefore, according to the shims 11 and 63 of the present embodiment, the shims 11 and 63 can be assembled to the back plates 19 with high accuracy by being elastically deformed when the disc brake pad assemblies 15 and 65 are assembled.

According to the shim attachment method of the present embodiment, the shims 11 and 63 can be assembled to the back plates 19 with high accuracy and with short-time work without using a jig or a tool.

According to the disc brake pad assembly 15 (65) of the present embodiment, since the shim 11 (63) is assembled so as to surround the fixing portions 27 of the back plates 19, falling of the shim 11 (63) does not occur unless the shim 11 (63) is broken in a caliper holder mounting state. Further, even when the interval between the lower end of the caliper holder 47 and the ground is smaller than the length of the set of friction pads, the friction pads 13 and 13 can be easily removed from the caliper holder 47.

### INDUSTRIAL APPLICABILITY

Further, according to a shim attachment method of the present invention, the shim can be assembled to back plates with high accuracy and with short-time work without using a jig or a tool.

Further, according to a disc brake pad assembly of the present invention, since the shim is assembled so as to surround fixing portions of back plates, falling of the shim does not occur unless the shim is broken in a caliper holder mounting state.

### REFERENCE SIGNS LIST

- 11: shim
- 15: disc brake pad assembly
- 17: lining
- 19: back plate
- 25: anchor plate
- 27: fixing portion
- 29: shim engaging hole
- 33: engaging portion
- 35: insertion portion
- 37: dovetail root portion
- 39: wide portion
- 41: fixing claw portion
- 43: abutment surface
- 45: chamfered portion
- 47: caliper holder
- 49: holding portion

## Claims

1. A pad assembly (15, 65) for a disc brake, wherein a shim (11, 63) is attached to the back surface of a back plate (19),
wherein the back plate (19) has a lining (17) molded on a surface thereof, wherein the shim (11, 63) has a shim engaging hole (29) into which a dovetail-shaped fixing portion (27) of an anchor plate (25) provided on the back plate (19) is fitted **characterised in that** it includes an engaging portion (33) that has an opening width (H1) larger than a width (W1) of a dovetail root portion (37) of the fixing portion (27) and smaller than a width (W2) of a wide portion (39) of the fixing portion (27), and is formed in a part of the shim engaging hole (29) along a dovetail insertion direction (X) of the fixing portion (27), and an insertion portion (35) that has an opening width (H2) larger than the width (W2) of the wide portion (39) of the fixing portion (27) and is formed in another portion of the shim engaging hole (29) along the dovetail insertion direction (X).

2. The pad assembly (15, 65) according to claim 1, wherein the engaging portions (33) are formed on both end sides of the shim engaging hole (29) along the dovetail insertion direction (X), and the insertion portion (35) is formed on a center side of the shim engaging hole (29) along the dovetail insertion direction (X).

3. The pad assembly (15, 65) according to claim 2, wherein a central portion of the shim engaging hole (29) along the dovetail insertion direction (X) is provided with a pair of fixing claw portions (41) for performing positioning in the dovetail insertion direction (X) by being respectively engaged with chamfered portions (45) formed at both end portions of the fixing portion (27) in a width direction on an abutment surface (43) of the back plate (19) divided into two.

4. The pad assembly (15, 65) according to claim 3, wherein the fixing claw portions (41) are engaged to a dovetail-groove-shaped holding portion (49) of a caliper holder (47) that holds the fixing portion (27), so that deformation in a direction in which a center of the shim engaging hole (29) is widened is prevented.

5. The pad assembly (15, 65) according to any one of claims 1 to 4, wherein the shim (63) is provided with a plurality of grease holding holes (61) for storing grease at a portion facing the back surface of the back plate (19).

6. The pad assembly (15, 65) according to claim 5, wherein the grease holding hole (61) is a hole that extends along the dovetail insertion direction (X) of the shim engaging hole (29).

7. A shim mounting method comprising: in a state where a shim (11, 63) is bent along the dovetail insertion direction (X),
the shim (11, 63) being configured to be attached to a back surface of a back plate (19) which has a lining (17) molded on a surface thereof, wherein a shim engaging hole (29) into which a dovetail-shaped fixing portion (27) of an anchor plate (25) provided on the back plate (19) is fitted **characterised in that** it includes an engaging portion (33) that has an opening width (H1) larger than a width (W1) of a dovetail root portion (37) of the fixing portion (27) and smaller than a width (W2) of a wide portion (39) of the fixing portion (27), and is formed in a part of the shim engaging hole (29) along a dovetail insertion direction (X) of the fixing portion (27), and an insertion portion (35) that has an opening width (H2) larger than the width (W2) of the wide portion (39) of the fixing portion (27) and is formed in another portion of the shim engaging hole (29) along the dovetail insertion direction (X),
wherein the engaging portions (33) are formed on both end sides of the shim engaging hole (29) along the dovetail insertion direction (X), and the insertion portion (35) is formed on a center side of the shim engaging hole (29) along the dovetail insertion direction (X),
the method being **characterised by** fitting the fixing portion (27) of the back plate (19) divided into two into the shim engaging hole (29) by inserting the fixing portion (27) from the insertion portion (35) into the engaging portion (33).

## Patentansprüche

1. Belaganordnung (15, 65) für eine Scheibenbremse, wobei eine Unterlegscheibe (11, 63) an der hinteren Oberfläche einer Rückplatte (19) angebracht ist,
wobei die Rückplatte (19) einen auf einer Oberfläche davon geformten Belag (17) aufweist, wobei die Unterlegscheibe (11, 63) ein Unterlegscheiben-Eingriffsloch (29) aufweist, in das ein schwalbenschwanzförmiger Befestigungsabschnitt (27) einer an der Rückplatte (19) vorgesehenen Ankerplatte (25) eingepasst ist, **dadurch gekennzeichnet, dass** diese Folgendes umfasst
einen Eingriffsabschnitt (33), der eine Öffnungsbreite (H1) aufweist, die größer als eine Breite (W1) eines Schwalbenschwanz-Wurzelabschnitts (37) des Befestigungsabschnitts (27) und kleiner als eine Breite (W2) eines breiten Abschnitts (39) des Befestigungsabschnitts (27) ist, und der in einem Teil des Unterlegscheiben-Eingriffslochs (29) entlang einer Schwalbenschwanz-Einführrichtung (X) des Befestigungsabschnitts (27) ausgebildet ist, und
einen Einführungsabschnitt (35), der eine Öffnungsbreite (H2) aufweist, die größer ist als die Breite (W2) des breiten Abschnitts (39) des Befestigungsabschnitts (27), und der in einem anderen Abschnitt des Unterlegscheiben-Eingriffslochs (29) entlang der Schwalbenschwanz-Einführrichtung (X) ausgebildet ist.

2. Belaganordnung (15, 65) nach Anspruch 1, wobei
die Eingriffsabschnitte (33) an beiden Endseiten des Unterlegscheiben-Eingriffslochs (29) entlang der Schwalbenschwanz-Einführrichtung (X) ausgebildet sind, und
der Einführungsabschnitt (35) an einer Mittelseite des Unterlegscheiben-Eingriffslochs (29) entlang der Schwalbenschwanz-Einführrichtung (X) ausgebildet ist.

3. Belaganordnung (15, 65) nach Anspruch 2, wobei
ein zentraler Abschnitt des Unterlegscheiben-Eingriffslochs (29) entlang der Schwalbenschwanz-Einführrichtung (X) mit einem Paar von Befestigungsklauenabschnitten (41) versehen ist, um eine Positionierung in der Schwalbenschwanz-Einführrichtung (X) durchzuführen, indem sie jeweils mit abgeschrägten Abschnitten (45) in Eingriff gebracht werden, die an beiden Endabschnitten des Befestigungsabschnitts (27) in einer Breitenrichtung auf einer Widerlagerfläche (43) der Rückplatte (19) ausgebildet sind, die in zwei Teile geteilt ist.

4. Belaganordnung (15, 65) nach Anspruch 3, wobei
die Befestigungsklauenabschnitte (41) mit einem schwalbenschwanznutförmigen Halteabschnitt (49) eines Bremssattelhalters (47) in Eingriff stehen, der den Befestigungsabschnitt (27) hält, so dass eine Verformung in einer Richtung verhindert wird, in der eine Mitte des Unterlegscheiben-Eingriffslochs (29) aufgeweitet ist.

5. Belaganordnung (15, 65) nach einem der Ansprüche 1 bis 4, wobei
die Unterlegscheibe (63) mit einer Vielzahl von Schmierfetthaltelöchern (61) zum Speichern von Schmierfett an einem Abschnitt versehen ist, der der hinteren Oberfläche der Rückplatte (19) zugewandt ist.

6. Belaganordnung (15, 65) nach Anspruch 5, wobei
das Schmierfetthalteloch (61) ein Loch ist, das sich entlang der Schwalbenschwanz-Einführrichtung (X) des Unterlegscheiben-Eingriffslochs (29) erstreckt.

7. Verfahren zur Montage einer Unterlegscheibe, umfassend:
in einem Zustand, in dem eine Unterlegscheibe (11, 63) entlang der Schwalbenschwanz-Einführrichtung (X) gebogen ist,
die Unterlegscheibe (11, 63) so konfiguriert ist, dass sie an einer hinteren Oberfläche einer Rückplatte (19), die einen auf einer Oberfläche davon geformten Belag (17) aufweist, befestigt werden kann, wobei ein Unterlegscheiben-Eingriffsloch (29), in das ein schwalbenschwanzförmiger Befestigungsabschnitt (27) einer an der Rückplatte (19) vorgesehenen Ankerplatte (25) eingepasst ist, **dadurch gekennzeichnet ist, dass** diese Folgendes umfasst
einen Eingriffsabschnitt (33), der eine Öffnungsbreite (H1) aufweist, die größer als eine Breite (W1) eines Schwalbenschwanz-Wurzelabschnitts (37) des Befestigungsabschnitts (27) und kleiner als eine Breite (W2) eines breiten Abschnitts (39) des Befestigungsabschnitts (27) ist, und der in einem Teil des Unterlegscheiben-Eingriffslochs (29) entlang einer Schwalbenschwanz-Einführrichtung (X) des Befestigungsabschnitts (27) ausgebildet ist, und
einen Einführungsabschnitt (35), der eine Öffnungsbreite (H2) aufweist, die größer ist als die Breite (W2) des breiten Abschnitts (39) des Befestigungsabschnitts (27), und der in einem anderen Abschnitt des Unterlegscheiben-Eingriffslochs (29) entlang der Schwalbenschwanz-Einführrichtung (X) ausgebildet ist,
wobei die Eingriffsabschnitte (33) an beiden Endseiten des Unterlegscheiben-Eingriffslochs (29) entlang der Schwalbenschwanz-Einführrichtung (X) ausgebildet sind, und der Einführungsabschnitt (35) an einer Mittelseite des Unterlegscheiben-Eingriffslochs (29) entlang der Schwalbenschwanz-Einführrichtung (X) ausgebildet ist,
wobei das Verfahren **dadurch gekennzeichnet ist, dass** der Befestigungsabschnitt (27) der in zwei Teile geteilten Rückplatte (19) in das Unterlegscheiben-Eingriffsloch (29) eingepasst wird, indem der Befestigungsabschnitt (27) vom Einführungsabschnitt (35) in den Eingriffsabschnitt (33) eingeführt wird.

## Revendications

1. Ensemble de plaquettes (15, 65) pour un frein à disque, dans lequel une cale (11, 63) est fixée à la surface arrière d'une plaque arrière (19),
dans lequel la plaque arrière (19) a une doublure (17) moulée sur une surface de celle-ci, dans lequel la cale (11, 63) a un trou d'engagement de cale (29) dans lequel une partie de fixation (27) en forme de queue d'aronde d'une plaque d'ancrage (25) fournie sur la plaque arrière (19) est montée **caractérisé en ce qu'**il comprend une partie d'engagement (33) qui a une largeur d'ouverture (H1) supérieure à une largeur (W1) d'une partie de racine de queue d'aronde (37) de la partie de fixation (27) et inférieure à une largeur (W2) d'une partie large (39) de la partie de fixation (27), et est formé dans une partie du trou d'engagement de cale (29) le long d'un sens d'insertion en queue d'aronde (X) de la partie de fixation (27), et une partie d'insertion (35) dont la largeur d'ouverture (H2) est supérieure à la largeur (W2) de la partie large (39) de la partie de fixation (27) est formée dans une autre partie du trou d'engagement de cale (29) le long du sens d'insertion en queue d'aronde (X).

2. Ensemble de plaquettes (15, 65) selon la revendication 1, dans lequel les parties d'engagement (33) sont formées sur les deux côtés d'extrémité du trou d'engagement de cale (29) le long du sens d'insertion en queue d'aronde (X), et la partie d'insertion (35) est formée sur un côté central du trou d'engagement de cale (29) le long du sens d'insertion en queue d'aronde (X).

3. Ensemble de plaquettes (15, 65) selon la revendication 2, dans lequel une partie centrale du trou d'engagement de cale (29) le long du sens d'insertion en queue d'aronde (X) est pourvue d'une paire de parties griffes de fixation (41) pour effectuer un positionnement dans le sens d'insertion en queue d'aronde (X) en venant respectivement en prise avec des parties chanfreinées (45) formées aux deux parties d'extrémités de la partie de fixation (27) dans le sens de la largeur sur une surface de butée (43) de la plaque arrière (19) divisée en deux.

4. Ensemble de plaquettes (15, 65) selon la revendication 3, dans lequel les parties griffes de fixation (41) sont en prises avec une partie de maintien en forme de rainure de queue d'aronde (49) d'un support à cantilever (47) qui maintient la partie de fixation (27), de sorte que la déformation dans un sens dans lequel un centre du trou d'engagement de cale (29) est élargi est empêchée.

5. Ensemble de plaquettes (15, 65) selon l'une quelconque des revendications 1 à 4, dans lequel la cale (63) est pourvue d'une pluralité de trous de stockage de graisse (61) destinés à stocker de la graisse dans une partie faisant face à la surface arrière de la plaque arrière (19).

6. Ensemble de plaquettes (15, 65) selon la revendication 5, dans lequel le trou de stockage de la graisse (61) est un trou qui s'étend le long du sens d'insertion en queue d'aronde (X) du trou d'engagement de cale (29).

7. Procédé de montage d'une cale comprenant : dans un état où la cale (11, 63) selon l'une quelconque des revendications 2 à 4 est pliée le long du sens d'insertion en queue d'aronde (X),
la cale (11, 63) étant configurée pour être fixée à une surface arrière d'une plaque arrière (19) qui a une doublure (17) moulée sur une surface de celle-ci, dans laquelle un trou d'engagement de cale (29) dans lequel une partie de fixation (27) en forme de queue d'aronde d'une plaque d'ancrage (25) fournie sur la plaque arrière (19) est montée est **caractérisé en ce qu'**il comprend une partie d'engagement (33) qui a une largeur d'ouverture (H1) supérieure à une largeur (W1) d'une partie de racine de queue d'aronde (37) de la partie de fixation (27) et inférieure à une largeur (W2) d'une partie large (39) de la partie de fixation (27), et est formé dans une partie du trou d'engagement de cale (29) le long du sens d'insertion en queue d'aronde (X),
dans lequel les parties d'engagement (33) sont formées sur les deux côtés d'extrémité du trou d'engagement de cale (29) le long du sens d'insertion en queue d'aronde (X), et la partie d'insertion (35) est formée sur un côté central du trou d'engagement de cale (29) le long du sens d'insertion en queue d'aronde (X),
le procédé étant **caractérisé par** l'installation de la partie de fixation (27) de la plaque arrière (19) divisée en deux dans le trou d'engagement de cale (29) en insérant la partie de fixation (27) de la partie d'insertion (35) dans la partie d'engagement (33).
